# EUROPÄISCHE PATENTANMELDUNG

(11) **EP 0 696 499 A1**
(43) Veröffentlichungstag der Anmeldung: **14.02.1996**
(21) Anmeldenummer: 94810466.6
(22) Anmeldetag: 11.08.1994
(51) Int. Cl.: B29C 45/37, B29C 39/26

(54) **Verfahren und Vorrichtung zur Herstellung von dünnwandigen Giesslingen**

(71) Anmelder: CIBA-GEIGY AG, CH-4002 Basel (CH)
(72) Erfinder: Lucchi, Marco, CH-4123 Allschwil (CH); Saner, Niklaus, CH-4423 Hersberg (CH)

(57) **Zusammenfassung**

Bei dem Verfahren zur Herstellung von dünnwandigen Giesslingen, speziell von dünnwandigen, plattenförmigen Giesslingen (P), wird in eine geschlossene Form, durch deren formgebenden Flächen die äussere Gestalt des herzustellenden Giesslings definiert wird, eine im wesentlichen flüssige oder pasteuse Giessmasse unter Druck eingebracht. Diese Giessmasse wird anschliessend zumindest zu einem solchen Grad gehärtet, dass der Giessling (P) nach dem Öffnen der Form entnommen werden kann. Die von der Giessmasse auf die formgebenden Flächen (120,130) ausgeübten Kräfte werden durch Gegenkräfte innerhalb der Form kompensiert.

## Beschreibung

Die Erfindung betrifft ein Verfahren und eine Vorrichtung zur Herstellung von dünnwandigen Giesslingen gemäss dem Oberbegriff des jeweiligen unabhängigen Patentanspruchs.

Zur Herstellung von Giesslingen wird heute das sogenannte Druckgelierverfahren eingesetzt. Die Giessmasse wird bei diesem Verfahren beispielsweise von unten her unter Druck zwischen zwei Formhälften eingebracht, die zuvor mittels einer Schliesseinheit geschlossen worden sind. Als Giessmasse werden dabei beispielsweise Epoxidharze verwendet, die in der so gebildeten Form thermisch gehartet werden, so dass die Giesslinge nach dem Härtungsvorgang und dem anschliessenden Öffnen der Formhälften entnommen werden können.

Zum thermischen Härten der zwischen die Formhälften eingebrachten Giessmasse sind die Formhälften auf eine bestimmte Temperatur vorgeheizt. Die Erwärmung des Epoxidharzes durch die Formtemperatur beschleunigt die exotherme Reaktion des Epoxidharzes, die eine Härtung zur Folge hat. Nach dem vollständigen Befüllen der Form wird zwischen die Formhälften weiter Giessmasse unter Druck zugeführt, um den Volumenschwund beim Härtungsvorgang auszugleichen, damit die auf diese Weise hergestellten Giesslinge frei von Lunkern, Einschlüssen oder Rissen sind.

Dem Forminnenraum, also dem Raum zwischen den beiden Formhälften, der die Gestalt des Giesslings definiert, wird also wahrend der gesamten Herstellung des Giesslings, Giessmasse unter Druck zugeführt. Damit die Giesslinge die gewünschte Gestalt haben, muss die Form geschlossen gehalten werden, es muss also ein entsprechender Druck von aussen her durch die Schliesseinheit aufgebracht werden. Dies stellt bei Giesslingen mit kleineren und mittelgrossen Oberflächen noch kein unlösbares Problem dar, weshalb dieses Verfahren zur Herstellung solcher Giesslinge auch grundsätzlich gut geeignet ist, in Bezug auf dünnwandige Giesslinge mit grossen Oberflächen allerdings gewisse Probleme aufwirft.

Bei der Herstellung solcher Giesslinge wirken nämlich sehr grosse Kräfte auf die formgebenden Flächen, sodass extrem hohe Anforderungen an die Schliesseinheit gestellt werden. Üblicherweise haben solche Schliesseinheiten einen einzigen hydraulischen Antrieb, der jeweils die gesamten Kräfte aufbringen muss. Da diese Kräfte bei Giesslingen mit grosser Fläche sehr gross werden können, sind solche Schliesseinheiten technisch äusserst aufwendig und darüberhinaus sehr teuer. Im übrigen sollen sich die formgebenden Flächen auch nicht verformen können, damit die dünnwandigen Giesslinge mit einer entsprechenden Genauigkeit hergestellt werden können.

Es ist daher eine Aufgabe der vorliegenden Erfindung, ein Verfahren und eine Vorrichtung zur Herstellung dünnwandiger Giesslinge vorzuschlagen, bei dem an die Schliesseinheit, speziell an den Antrieb, keine hohen Anforderungen in Bezug auf aufzubringende Kräfte gestellt werden und wobei die Giesslinge entweder nur geringe oder gar keine Schwankungen in ihrer Dicke und Gestalt aufweisen.

Diese Aufgabe wird verfahrensmässig durch die Merkmale des unabhängigen Verfahrensanspruchs gelöst. Dadurch, dass die von der Giessmasse auf die formgebenden Flächen ausgeübten Kräfte durch Gegenkräfte innerhalb der Form kompensiert werden, kann die Ausgestaltung der Schliesseinheit sehr einfach erfolgen und an den Antrieb der Schliesseinheit werden keine hohen Anforderungen in Bezug auf aufzubringende Kräfte gestellt. Ausserdem weisen die Giesslinge eine hohe Konstanz in ihrer Dicke und Gestalt auf.

Bei einer Ausführungsvariante des erfindungsgemässen Verfahrens werden die Gegenkräfte mit Hilfe einer im wesentlichen flüssigen, unter Druck stehenden Masse erzeugt. Diese wird auf der jeweiligen dem Giessling abgewandten Seite der formgebenden Flächen her eingebracht, sodass die formgebenden Flächen praktisch kräftekompensiert sind. Die durch die Schliesseinheit aufzubringenden Kräfte können dann durch eine entsprechend einfache Ausgestaltung der Schliesseinheit aufgebracht werden, wobei der Antrieb der Schliesseinheit praktisch nur die Kraft aufbringen muss, damit die Formhälften aufeinander zu bzw. voneinander weg bewegt werden.

Bei einer Weiterbildung dieses Verfahrens erfolgt das Einbringen der Giessmasse zwischen die formgebenden Flächen von unten her. Auf der dem Giessling abgewandten Seite der formgebenden Flächen - ebenfalls von unten her - wird die im wesentlichen flüssige Masse unter Druck eingebracht, und zwar entweder bevor die Giessmasse zwischen die formgebenden Flächen eingebracht wird oder gleichzeitig. Die Kompensation der Kräfte erfolgt also über den hydrostatischen Druck dieser flüssigen Masse.

Speziell kann als Giessmasse ein Epoxidharz verwendet werden, welches dann zwischen die formgebenden Flächen eingebracht und in der Form thermisch gehärtet wird. Zur Kompensation der auf die formgebenden Flächen ausgeübten Kräfte wird eine im wesentlichen flüssige Masse verwendet, welche eine etwa gleiche Dichte aufweist wie das Epoxidharz. Wenn nun noch der Druck, mit dem die im wesentlichen flüssige Masse eingebracht wird und der Druck, mit dem die Giessmasse zwischen die Formhälften eingebracht wird, so gesteuert werden, dass sie im wesentlichen gleich gross sind, dann werden auf diese Weise die Kräfte quasi aufjedem Punkt der formgebenden Fläche kompensiert, da der hydrostatische Druck nur von der Dichte der flüssigen Masse (und vom Füllstand) abhängt, sodass bei gleicher Dichte des Epoxidharzes und der flüssigen Masse (und gleichem Füllstand) dann auch die hydrostatischen Drücke jeweils gleich sind.

Als flüssige Masse zur Kompensation der auf die formgebenden Flächen vom Epoxidharz ausgeübten Kräfte kann dabei ein Öl verwendet werden.

Vorrichtungsmässig wird die Aufgabe durch die Merkmale des unabhängigen Vorrichtungsanspruchs gelöst. Diese Ausgestaltung der Form ermöglicht eine einfache und kostengünstige Herstellung der einzelnen Teile der Form und einen einfachen Zusammenbau. Darüberhinaus ermöglicht sie natürlich, dass keine hohen Anforderungen in Bezug auf Kräfte an die Schliesseinheit, speziell an deren Antrieb gestellt werden. Mit einer solchen Form können zudem dünnwandige Giesslinge mit einer hohen Konstanz in Dicke und äusserer Gestalt hergestellt werden.

In einem Ausführungsbeispiel der Vorrichtung ist zum Einbringen der Giessmasse zwischen die formgebenden Flächen ein Giesskanal vorgesehen, der von unten her zwischen die beiden formgebenden Flächen der Giessform mündet. Ausserdem ist zum Einbringen einer im wesentlichen flüssigen, unter Druck stehenden Masse zwischen der jeweiligen äusseren und der jeweiligen inneren Platte ein Kanal vorgesehen, der von unten her in den Raum zwischen diesen Platten mündet. In diesen Raum wird die im wesentlichen flüssige Masse, vorzugsweise ein Öl, unter Druck eingebracht. Die Herstellung des Giesslings erfolgt also quasi kräftkompensiert. Die formgebenden Flächen können sich demzufolge aufgrund des Drucks, mit dem die Giessmasse eingebracht wird, nicht verformen, da von der anderen Seite her ein entsprechender Gegendruck aufgebracht wird. Auf diese Weise können einwandfreie unverformte Giesslinge auch dann zuverlässig hergestellt werden, wenn die inneren Platten mit den formgebenden Flächen dünn ausgebildet sind.

In einer Weiterbildung der Vorrichtung ist eine Steuerung vorgesehen, welche den Druck, mit dem die flüssige Masse eingebracht wird, und den Druck, mit dem die Giessmasse eingebracht wird, so steuert, dass diese Drücke im wesentlichen gleich gross sind. Dabei ist die Dichte der Giessmasse und die Dichte der flüssigen Masse etwa gleich gross. Auf diese Weise wird die bereits erwähnte kräftkompensierte Herstellung des Giesslings ermöglicht.

Im folgenden wird die Erfindung anhand der Zeichnung naher erläutert. Es zeigen, teilweise in schematischer Darstellung oder im Schnitt:
- Fig. 1: ein Ausführungsbeispiel einer erfindungsgemässen Giessform,
- Fig. 2: die obere Hälfte der Giessform der Fig. 1 in vergrösserter Darstellung
und
- Fig. 3: ein Ausführungsbeispiel eines Schliessrahmens.

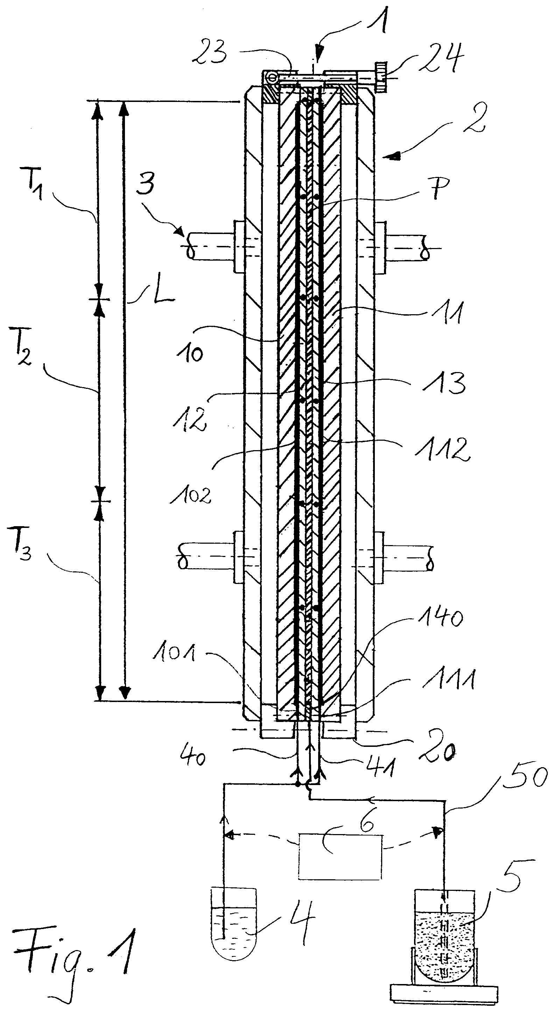

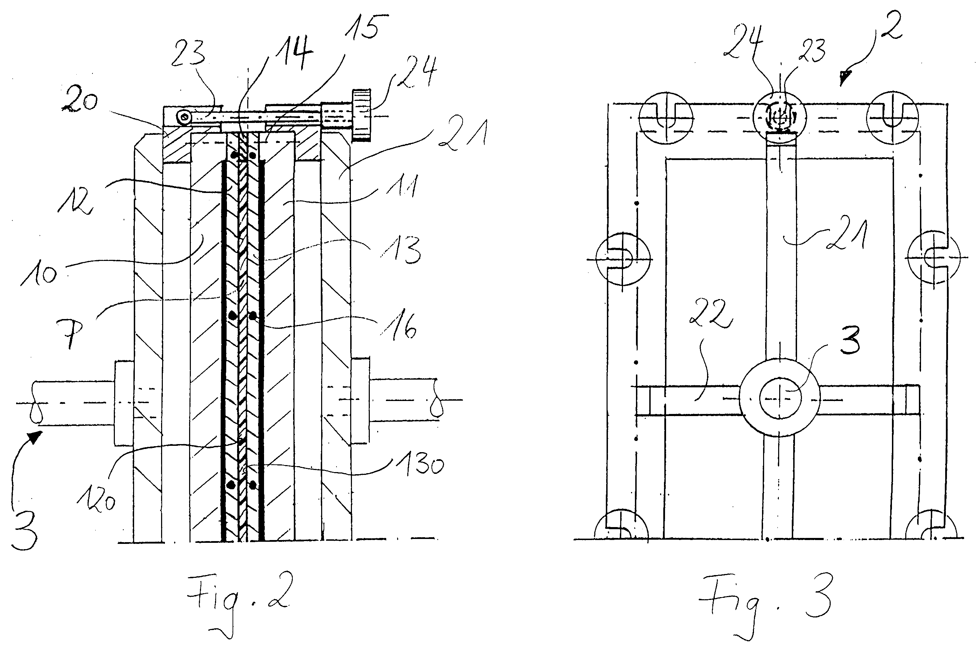

Ein Ausführungsbeispiel einer erfindungsgemässen Giessform ist in Fig. 1 dargestellt. Die Giessform 1 umfasst jeweils zwei äussere Platten 10 und 11 sowie zwei innere Platten 12 und 13. Ferner ist in Fig. 1 jeweils noch ein Schliessrahmen 2 zu erkennen, der einen Rahmen 20 mit einem L-profil sowie Längs- und Querverstrebungen 21 und 22 (Fig. 3) aufweist. Darüberhinaus ist eine Schliess- und Öffnungseinrichtung 3 angedeutet, die an den Kreuzungspunkten der Längs- und Querverstrebungen angreift. Ferner sind noch zwei Drucktöpfe 4 und 5 vorgesehen sowie Leitungen 40,41 und 50. Im Drucktopf 4 befindet sich eine im wesentlichen flüssige Masse, im Drucktopf 5 die Giessmasse, aus der der Giessling hergestellt wird. Ferner ist noch eine Steuerung 6 zu erkennen.

Zwischen der jeweiligen äusseren Platte 10 bzw. 11 und der zugehörigen inneren Platte 12 bzw. 13 ist an der Unterseite jeweils ein schmaler Kanal 101 bzw. 111 vorgesehen, der jeweils in einen Hohlraum mündet, der durch eine entsprechende flächenmässige Aussparung 102 bzw. 112 in der jeweiligen äusseren Platte 10 bzw. 11 vorgesehen ist. Würde die Platte 10 bzw. 11 horizontal angeordnet sein, würde die flächenmässige Aussparung aussehen wie ein niedriges Becken. In Fig. 1 befindet sich in diesen Aussparungen die flüssige Masse zur Kräftekompensation.

Die äusseren Platten 10 bzw. 11 sowie die inneren Platten 12 und 13 sowie das Zwischenstück 14 (Fig. 2) sind zu einer Form zusammenschiebbar, was in Fig. 2 durch die strichlierte Linie 15 symbolisch angedeutet ist. Durch diese Ausgestaltung der Form sind die einzelnen Teile der Form sehr leicht herstellbar, gleichzeitig ist die Form leicht montierbar und demontierbar.

Wie man ebenfalls aus Fig. 2 erkennen kann, sind in der Form Heizpatronen 16 vorgesehen, um zumindest die inneren Platten 12 und 13 zu heizen. Diese Heizpatronen (eine andere Heizeinrichtung ist ebenfalls denkbar) sind speziell für die Verwendung von Epoxidharzen als Giessmasse erforderlich. Mit Hilfe der Heizpatronen 16 werden nämlich zumindest die inneren Platten 12 und 13 auf eine Temperatur geheizt, die oberhalb der Geliertemperatur des Epoxidharzes liegt, so dass das in die Form eingebrachte Epoxidharz zumindest zu einem solchen Grad thermisch gehartet wird, dass der Giessling nach dem späteren Öffnen der Form entformt werden kann. Speziell kann die Form dabei in drei Temperaturzonen T₁, T₂, T₃ auf unterschiedliche Temperaturen geheizt sein (Fig. 1), wobei ein Temperaturgefälle von oben nach unten besteht.

Um die Form für die Herstellung eines Giesslings vorzubereiten, werden zunächst die inneren und äusseren Platten 12 und 10 sowie 13 und 11 wie auch das Zwischenstück 14 zusammengeschoben und sodann der jeweilige Schliessrahmen 2 von beiden Seiten her gegen die Form bewegt. Dies erfolgt mittels der Schliess- und Öffnungseinrichtung 3, deren Antriebe zwar nicht explizit dargestellt sind, deren kraftübertragenden Teile jedoch an den Kreuzungspunkten der Längs- und Querverstrebungen 21 und 22 angreifen.

Wie speziell aus Fig. 2 und Fig. 3 zu erkennen ist, sind an dem einen Schliessrahmen (am linken Rahmen) über dessen Umfang einige schwenkbare Anker 23 verteilt. Der andere (der rechte) Schliessrahmen wird mit Hilfe von Rändelmuttern 24 gekontert. Somit ist die Form fixiert. Die Fixierung könnte auch mit entsprechenden hydraulischen Schliesszylindern realisiert werden, damit diese Fixierung automatisch erfolgen kann.

Bei der so fixierten Form ist zwischen den beiden inneren Platten 12 und 13 ein Hohlraum angeordnet, sodass die Innenflächen 120 und 130 der inneren Platten 12 und 13 die Gestalt eines herzustellenden dünnwandigen, plattenförmigen Giesslings P definieren - sie wirken also als formgebende Flächen. In diesen Hohlraum hinein mündet ein Giesskanal 140, der an der Unterseite des Zwischenstücks 14 vorgesehen ist.

Nach der Montage und Fixierung der Form wird nun zunächst die flüssige Masse, z.B. ein Öl, welches die gleiche Dichte aufweist wie die Giessmasse, z.B. ein Epoxidharz, aus dem Drucktopf 4 über die Leitungen 40 und 41 sowie durch die Kanäle 101 und 111 in die Aussparungen 102 und 112 eingebracht, bis diese vollständig gefüllt sind und der mittels der Steuerung 6 eingestellte Druck p₁ herrscht. Die Form ist mit Hilfe der Heizpatronen 16 zu diesem Zeitpunkt oder auch mit Hilfe der flüssigen Masse bereits auf die gewünschte Temperatur geheizt.

Nun wird aus dem Drucktopf 5 über die Leitung 50 und durch den Giesskanal 140 hindurch die Giessmasse in den Raum zwischen den beiden formgebenden Flächen 120 und 130 eingebracht. Dies erfolgt solange, bis der Raum zwischen den beiden formgebenden Flächen 120 und 130 befüllt ist. Zu diesem Zeitpunkt muss zwischen den formgebenden Flächen 120 und 130 der gleiche Druck p₁ herrschen, der in den Aussparungen 102 und 112 herrscht. Danach wird mittels der Steuerung 6 ein erhöhter Druck p₂ angelegt, mit welchem Giessmasse aus dem Drucktopf gefördert wird, um den beim Harten auftretenden Schwund der Giessmasse (Epoxidharz) zu kompensieren. Die Steuerung 6 sorgt gleichzeitig für eine Erhöhung des Drucks auf p₂ in den beiden Aussparungen 102 und 112, damit die inneren Platten 12 und 13 und insbesondere die formgebenden Flächen 120 und 130 wieder kräftekompensiert sind und sich nicht verformen können, auch wenn sie nur dünn ausgebildet sind. Auf die Schliesseinrichtung 3 wirken dabei keine oder nur geringe zusätzliche Kräfte, sodass keine hohen Anforderung in Bezug auf Kräftekompensation an die Schliesseinheit gestellt werden.

Die auf die äusseren Platten 10 und 11 nach aussen wirkenden Kräfte werden nämlich mehr oder weniger von den Anker-Rändelmutter-Halteeinrichtungen aufgenommen, die über den gesamten Schliessrahmen verteilt angeordnet sind. Grundsätzlich können die äusseren Platten 10 und 11 sogar verformbar ausgebildet sein; durch die Tatsache, dass der Druck in den Aussparungen 102 und 112 mit Hilfe der Steuerung 6 gesteuert wird, wird dann entsprechend flüssige Masse nachgefördert Vorzugsweise sind die äusseren Platten 10 und 11 aber nicht oder nur gering verformbar ausgebildet.

Die in die Form eingebrachte Giessmasse (Epoxidharz) wird in der Form gehärtet. Anschliessend werden die Rändelmuttern 24 gelöst und die beiden Schliessrahmen zurückgefahren, so dass nach dem nachfolgenden Öffnen der Form der Giessling P entformt werden kann.

Beispielsweise können auf diese Weise dünnwandige, plattenförmige Giesslinge hergestellt werden, deren Dicke im Bereich von 4-20 mm beträgt, deren Länge L (Fig. 1) z.B. etwa 3500 mm und deren Breite z.B. etwa 800 mm beträgt. Bei bekannten Verfahren bzw. Vorrichtungen und bei Giesslingen mit derartigen Abmessungen müssten dabei von der Schliesseinheit sehr grosse Kräfte (etwa 800-1000 kN) aufgebracht werden. Bei der Herstellung solcher Giesslinge gemäss der vorliegenden Erfindung müssen diese Kräfte hingegen nicht von der Schliesseinheit aufgebracht werden. Verformen können sich die formgebenden Flächen (wegen der Kräftekompensation) ebenfalls nicht. Die inneren Platten 12 und 13 (mit den formgebenden Flächen) der erfindungsgemässen Form können z.B. eine Dicke von 10-30 mm aufweisen, die Tiefe der Aussparungen 102 und 112 (und damit die Dicke der flüssigen Masse, z.B. eines Öls) kann etwa 1-5 mm betragen. Die äusseren Platten 10 und 11 schliesslich können beispielsweise eine Dicke von 40-80 mm aufweisen.

Als Giessmasse können gefüllte Epoxidharze verwendet werden. Die Temperaturen in den drei Temperaturzonen T₁,T₂,T₃ können dabei 160° C, 150° C und 140° C betragen. Als flüssige Masse zur Kräftekompensation kann beispielsweise eine Flüssigkeit mit gleicher Dichte wie die der Giessmasse verwendet werden. Im Falle der Verwendung eines gefüllten Epoxidharzes würde diese ca. ρ = 1.8 g/cm³ betragen.

Es ist selbstverständlich, dass das Epoxidharz bei einer deutlich geringeren Temperatur in dem Drucktopf 5 aufbewahrt werden muss, als es in der Form zum Harten benötigt, da es sonst bereits im Drucktopf 5 härten würde und nicht mehr in die Form eingebracht werden könnte. Die Temperatur des giessfertigen Epoxidharzes im Drucktopf kann infolgedessen beispielsweise im Bereich von etwa 60° C bis etwa 110° C liegen.

## Patentansprüche

1. Verfahren zur Herstellung von dünnwandigen Giesslingen, speziell von dünnwandigen, plattenförmigen Giesslingen (P), bei welchem Verfahren in eine geschlossene Form, durch deren formgebenden Flächen die äussere Gestalt des herzustellenden Giesslings definiert wird, eine im wesentlichen flüssige oder pasteuse Giessmasse unter Druck eingebracht und diese Giessmasse anschliessend zumindest zu einem solchen Grad gehartet wird, dass der Giessling nach dem Öffnen der Form entnommen werden kann, dadurch gekennzeichnet, dass die von der Giessmasse auf die formgebenden Flächen (120,130) ausgeübten Kräfte durch Gegenkräfte innerhalb der Form kompensiert werden.

2. Verfahren nach Anspruch 1, dadurch gekennzeichnet, dass die Gegenkräfte mit Hilfe einer im wesentlichen flüssigen, unter Druck stehenden Masse erzeugt werden, die auf der jeweiligen dem Giessling abgewandten Seite der formgebenden Flächen her eingebracht wird.

3. Verfahren nach Anspruch 2, dadurch gekennzeichnet, dass das Einbringen der Giessmasse zwischen die formgebenden Flächen von unten her erfolgt, und dass auf der dem Giessling abgewandten Seite der formgebenden Flächen ebenfalls von unten her die im wesentlichen flüssige Masse unter Druck eingebracht wird, und zwar bevor die Giessmasse zwischen die formgebenden Flächen eingebracht wird oder gleichzeitig.

4. Verfahren nach Anspruch 3, dadurch gekennzeichnet, dass als Giessmasse ein Epoxidharz verwendet wird, dass die zwischen die formgebenden Flächen eingebrachte Giessmasse thermisch gehartet wird, und dass zur Kompensation der auf die formgebenden Flächen ausgeübten Kräfte eine im wesentlichen flüssige Masse verwendet wird, welche eine im wesentlichen gleiche Dichte aufweist wie das Epoxidharz.

5. Verfahren nach Anspruch 4, dadurch gekennzeichnet, dass als im wesentlichen flüssige Masse zur Kompensation der auf die formgebenden Flächen vom Epoxidharz ausgeübten Kräfte ein Öl verwendet wird.

6. Verfahren nach einem der Ansprüche 3 bis 5, dadurch gekennzeichnet, dass der Druck, mit dem die im wesentlichen flüssige Masse eingebracht wird und der Druck, mit dem die Giessmasse zwischen die Formhälften eingebracht wird, so gesteuert werden, dass sie im wesentlichen gleich gross sind.

7. Vorrichtung zur Herstellung von dünnwandigen Giesslingen, speziell von dünnwandigen plattenförmigen Giesslingen (P), mit einer öffen- und schliessbaren Form, zwischen deren formgebende Flächen bei geschlossener Form eine Giessmasse unter Druck eingebracht und zumindest zu einem solchen Grad gehartet wird, dass der Giessling nach dem Öffnen der Form entformbar ist, wobei der Raum zwischen den beiden Formhälften die Gestalt des Giesslings definiert, dadurch gekennzeichnet, dass die Form jeweils eine äussere Platte (10,11) und eine formgebende innere Platte (12,13) umfasst, die so ausgebildet sind, dass im geschlossenen Zustand der Form zwischen der jeweiligen äusseren und inneren Platte ein Raum (102,112) vorgesehen ist, der im wesentlichen die gleiche Länge und die gleiche Breite aufweist wie der Raum zwischen den formgebenden Flächen, welcher die Gestalt des Giesslings (P) definiert, und dass eine Halteeinrichtung (23,24) vorgesehen ist, welche die Form im geschlossenen Zustand fest zusammenhält.

8. Vorrichtung nach Anspruch 7, dadurch gekennzeichnet, dass zum Einbringen der Giessmasse zwischen die formgebenden Flächen ein Giesskanal (140) vorgesehen ist, der von unten her zwischen die beiden formgebenden Flächen (120,130) der Giessform mündet, und dass zum Einbringen einer im wesentlichen flüssigen, unter Druck stehenden Masse zwischen der jeweiligen äusseren (10,11) und der jeweiligen inneren Platte (12,13) ein Kanal (101,111) vorgesehen ist, der von unter her in den Raum (102,112) zwischen diesen Platten (10,12,11,13) mündet.

9. Vorrichtung nach Anspruch 8, dadurch gekennzeichnet, dass eine Steuerung (6) vorgesehen ist, welche den Druck, mit dem die flüssige Masse eingebracht wird, und den Druck, mit dem die Giessmasse eingebracht wird, so steuert, dass sie im wesentlichen gleich gross sind, wobei die Dichte der Giessmasse und die Dichte der flüssigen Masse im wesentlichen gleich sind.
